# EUROPEAN PATENT APPLICATION

(11) **EP 4 760 009 A1**
(43) Date of publication of application: **17.06.2026**
(21) Application number: 25221202.2
(22) Date of filing: 05.12.2025
(51) Int. Cl.: E03C 1/04, E03C 1/044, E03C 1/05, F24D 17/00, F24H 1/10, A47J 31/40, F16K 11/00, A47J 31/36, A47J 31/46

(54) **HYDROSANITARY DEVICE WITH PRE-HEATING DEVICE**

(30) Priority: 10.12.2024 IT 202400028095
(71) Applicant: Gessi S.P.A., 13037 Serravalle Sesia VC (IT)
(72) Inventor: Gessi, Gian Luca, 13037 Serravalle Sesia (IT)
(74) Representative: PGA S.p.A., Milano, Succursale di Lugano

(57) **Abstract**

Hydrosanitary device (100), comprising a dispensing body and at least one among a valve (104) for controlling the dispensing of a hot fluid, and a boiler (500) or primary heater for producing the hot fluid,
wherein said valve (104) and/or said boiler (500) or primary heater is connected to said dispensing body by means of an inlet conduit (107),
and wherein said hydrosanitary device (100) comprises at least one first auxiliary heating element (188a) configured to act on said inlet conduit (107), preferably in cooperation with said valve (104) and/or boiler (500) or primary heater, for keeping the fluid that in use flows into said inlet conduit (107) within a predetermined range of temperatures, preferably up to the moment in which the fluid that flows in said inlet conduit (107) from said valve (104) and/or boiler (500) or primary heater reaches a temperature substantially comprised in said predetermined range of temperatures.

## Description

### Field of the art

The present disclosure relates to the field of hydrosanitary devices and in particular concerns a hydrosanitary device with a preheating device.

### Known art

There are known hydrosanitary devices capable of dispensing water, for example, for allowing a user to take a shower, a bath, or wash his or her hands, or even to produce hot water for beverage production.

These hydrosanitary devices are fed with water typically supplied from either a reservoir or a network source.

The hydrosanitary devices above described have a dispensing mouth that is not always close to the boiler with which hot water is generated.

DE 10 2014 004559 A1 discloses a water heater device for hydrosanitary devices, which is installed in correspondence of a wall. The heater device comprises a heater fed through a bypass conduit; sensors control the water temperature, and if it is hot enough, the heater is bypassed.

EP 3 835 497 A1 discloses a faucet with a unit for dispensing beverages from capsules. The faucet is connected with an external boiler to heat water.

DE 203 01 999 U1 discloses a device for preventing the formation of germs in correspondence of water withdrawal points, e.g., for shower heads, faucets and similar, particularly when associated with drinking water. In correspondence of a tubular wall there is a sheath provided with a winding that is connected to a power source. A distal portion of the tubular wall is equipped with a conical-type spray valve. The heater is designed to make the water heat up to at least 80°C.

GB 2 628 422 A discloses a device to feed a shower head with hot water and cold water. The branch of the hot water is provided with a reservoir and the device comprises a Venturi-effect mixing valve arranged upstream of the reservoir. The reservoir contains the water that at the beginning is not yet at the desired temperature, and feeds it back upstream through the mixing valve. The device is designed to prevent the waste of water at a lower temperature than desired.

### Summary

A purpose of the present disclosure is to describe a hydrosanitary device that allows to optimize the time by which the temperature of the fluid is appropriately regulated, for example by heating, from the dispensing mouth.

For this purpose it is herewith described a hydrosanitary device (100) in accordance to some main aspects thereof, which can be combined among them or with portions of the detailed description or of the claims.

In the present aspects, "optionally", "preferably", "in particular" precede technical features that, in the aspects, shall be considered not limiting.

In accordance to a first independent aspect is herein described a hydrosanitary device (100), comprising a dispensing body and at least one among a valve (104) for controlling the distribution of a hot fluid, and a boiler (500) or primary heater for producing said hot fluid,
wherein said valve (104) and/or said boiler (500) or primary heater is connected to said dispensing body by means of an inlet conduit (107),
and wherein said hydrosanitary device (100) comprises at least one first auxiliary heating element (188a) configured to act on said inlet conduit (107), and/or operatively acting on said inlet conduit (107), preferably in cooperation with said valve (104) and/or boiler (500) or primary heater, for keeping the fluid that in use flows into said inlet conduit (107) within a predetermined range of temperatures, preferably up to the moment in which the fluid that flows in said inlet conduit (107) from said valve (104) and/or boiler (500) or primary heater reaches a temperature substantially comprised in said predetermined range of temperatures.

According to another non-limiting aspect, said at least one first auxiliary heating element (188a) is configured to be activated for a predetermined time, and/or to be activated in accordance to at least one among the following parameters:
- a time lapsed from a last dispensing of said fluid;
- an environmental temperature;
- a type of conditioning of said fluid.

According to another non-limiting aspect, said fluid comprises water.

According to another non-limiting aspect, said fluid is drinking water.

According to another non-limiting aspect, the range of temperatures is [92-96] °C or is [70-80] °C.

According to another non-limiting aspect, said water is substantially boiling water.

According to another non-limiting aspect, said hot fluid has a temperature comprised in the range [30-105] °C, or comprised in the range [40-101] °C.

According to another non-limiting aspect, said hydrosanitary device (100) comprises a data processing unit (115) operatively connected at least with said first auxiliary heating element (188a).

According to another non-limiting aspect, said data processing unit is configured to control said first auxiliary heating element (188a) for keeping the fluid that in use flows within said inlet conduit (107) within said predetermined range of temperatures.

According to another non-limiting aspect, said data processing unit is operatively connected with, and in use acting in control on, said boiler (500) or primary heater and/or said valve (104) and/or being operatively connected to at least one sensor suitable for measuring at least one of said parameters.

According to another non-limiting aspect, said hydrosanitary device (100) is in form of a faucet, preferably a kitchen faucet, or in form of a wall-mount shower head, hand showerhead or faucet for shower or for bath tub.

According to another non-limiting aspect, said at least one first auxiliary heating element (188a) is of an electrical type and/or is electrically fed.

According to another non-limiting aspect, the hydrosanitary device (100) comprises at least one second auxiliary heating element (188b), optionally comprising furthermore a third auxiliary heating element (188c).

According to another non-limiting aspect, at least one among said first auxiliary heating element (188a), said second auxiliary heating element (188b), said third auxiliary heating element (188c) is arranged inside said dispensing body.

According to another non-limiting aspect, said second auxiliary heating element (188b), and optionally said third auxiliary heating element (188c), is configured to act on said inlet conduit, preferably in cooperation with said valve (104) and/or boiler (500) or primary heater, for keeping the fluid that in use flows into said inlet conduit within a predetermined range of temperatures, preferably up to the moment in which the fluid that flows in said inlet conduit (107) from said valve (104) and/or boiler (500) or primary heater reaches a temperature substantially comprised in said predetermined range of temperatures.

According to another non-limiting aspect, said second auxiliary heating element (188b), and/or said third auxiliary heating element (188c), is electrically fed.

According to another non-limiting aspect, said first auxiliary heating element (188a), and/or said second auxiliary heating element (188b), are arranged in series or in sequence.

According to another non-limiting aspect, said data processing unit (115) is operatively connected with said second auxiliary heating element (188b).

According to another non-limiting aspect, said data processing unit (115) is also operatively connected with said third auxiliary heating element (188c).

According to another non-limiting aspect, said data processing unit (115) is configured to control said second auxiliary heater (118b) for keeping the fluid that in use flows within said inlet conduit (107) within said predetermined range of temperatures.

According to another non-limiting aspect, said data processing unit (115) is configured to control said third auxiliary heater (118c) for keeping the fluid that in use flows within said inlet conduit (107) within said predetermined range of temperatures.

According to another non-limiting aspect, said data processing unit (115) is configured to determine a selective activation of said first auxiliary heating element (188a) or of said second auxiliary heating element (188b), optionally of said second auxiliary heating element (188b) or of said third auxiliary heating element (188c), and/or for determining a simultaneous activation of said first auxiliary heating element (188a) and of said second auxiliary heating element (188b), optionally of said second auxiliary heating element (188b) and of said third auxiliary heating element (188c) or of said first auxiliary heating element (188a) and of said third auxiliary heating element (188c).

According to another non-limiting aspect, said inlet conduit (107) comprises a rod or dispensing conduit (101), or realizes part of said dispensing body, said rod or dispensing conduit (101) comprising a dispensing mouth (102), optionally arranged in correspondence of a terminal portion of said rod or dispensing conduit (101).

According to another non-limiting aspect, said at least a first auxiliary heating element (188a), and optionally at least one between said second auxiliary heating element (188b) and said third auxiliary heating element (188c), is arranged in proximity of said dispensing mouth (102) and/or upstream, and preferably in substantial proximity of, or in substantial correspondence of, said rod or dispensing conduit (101).

According to another non-limiting aspect, said hydrosanitary device (100) comprises a control system suitable for preventing an excessive overheating of the fluid heated by the at least one first auxiliary heating element (188a) and/or for preventing an excessive overheating of said at least one first auxiliary heating element (188a), preferably configured to impede a boiling of the fluid.

According to another non-limiting aspect, said control system is configured to prevent that said at least one first auxiliary heating element (188a) leads to a localized boiling of the fluid.

According to another non-limiting aspect, said control system is suitable for preventing an excessive overheating of the fluid heated by said second auxiliary heating element (188b) and/or by said third auxiliary heating element (188c) and/or for preventing an excessive overheating of said second auxiliary heating element (188b) and/or of said third auxiliary heating element (188c).

According to another non-limiting aspect, said data processing unit (115) is configured to control at least said first auxiliary heating element (188a) for the purpose of preventing an excessive overheating of the fluid heated by the at least a first auxiliary heating element (188a).

According to another non-limiting aspect, said hydrosanitary device (100) comprises a dispensing device (108) for beverages extracted from containers for dispensing of beverages, in particular disposable and/or re-refillable containers,
the beverages dispensing device (108) comprising:
- a support body (108b) configured to be coupled to a body (103) of said faucet (100);
- a distributing body (108a) configured to be removably connected to said support body (108b) and comprising a dispensing portion (109) configured to allow a distribution of a beverage in a container (400);
wherein:
- at least one between said support body (108b) and said distributing body (108a) is configured to retain and/or contain at least part of a container for dispensing of beverages (190);
- said support body (108b) comprises a water supplying inlet (122) configured to receive a fluid from said faucet (100);
said dispensing device (108) having:
- an assembled operative configuration, wherein said support body (108b) and said distributing body (108a) are coupled for allowing a dispensing of said beverage by making said water flow from said supply inlet (122), into said container for dispensing of beverages (190), and towards said dispensing portion (109);
- a disassembled operative configuration, wherein said support body (108b) and said distributing body (108a) are uncoupled and allow an access to said container for dispensing of beverages (190).

According to another non-limiting aspect, said at least a first auxiliary heating element (188a) is arranged in correspondence of a branch of said inlet conduit (107) realizing a supply inlet (122) for said dispensing device (108).

According to another non-limiting aspect, said at least a first auxiliary heating element (188a) is arranged in correspondence of a branch of said inlet conduit (107) and does not result in direct contact with said fluid.

According to another non-limiting aspect, said at least a first auxiliary heating element (188a) is arranged in correspondence of a branch of said inlet conduit (107) and optionally results in direct contact with said fluid.

According to another non-limiting aspect, said hydrosanitary device (100) is configured to dispense, optionally by means of a control carried out by said data processing unit (115), a time-variant electric power at least to said at least one first auxiliary heating element (188a), optionally to said second auxiliary heating element (188b) and/or to said third auxiliary heating element (188c).

According to another non-limiting aspect, the hydrosanitary device (100) comprises at least a temperature sensor (189).

According to another non-limiting aspect, said at least one temperature sensor element (189) is configured to measure a temperature of said fluid in said inlet conduit (107), preferably in substantial correspondence of said rod or dispensing conduit (101) or in substantial proximity or correspondence of said dispensing mouth (102).

According to another non-limiting aspect, said at least one temperature sensor element (189) is configured to measure a temperature of said fluid in use present in correspondence of said body of dispensing.

According to another non-limiting aspect, said temperature sensor (189) is configured to transmit a control signal suitable for determining a control of said at least one first auxiliary heating element (188a) in such a way that this latter acts on said inlet conduit (107), preferably in cooperation with said valve (104) and/or boiler (500) or primary heater, for keeping the fluid that in use flows into said inlet conduit (107) into said predetermined range of temperatures, preferably up to the moment wherein the fluid that flows in said inlet conduit (107) from said valve (104) and/or boiler (500) or primary heater reaches said temperature substantially comprised in said predetermined range of temperatures.

According to another non-limiting aspect, said temperature sensor (189) is configured to preferably transmit said control signal towards said data processing unit (115).

According to another non-limiting aspect, said control signal is an electric signal.

According to another non-limiting aspect, said temperature sensor (189) is operatively, optionally electrically and/or optically, connected with said data processing unit (115).

According to another non-limiting aspect, said support body (108b) and said distributing body (108a), when in said assembled operative configuration, overall define a housing volume configured to contain, preferably completely, said container for dispensing of beverages (190).

According to another non-limiting aspect, said support body (108b) and said distributing body (108a), when in said assembled operative configuration, define a liquid-tight coupling and destined to allow the transit of said fluid from said supply inlet (122) to said dispensing portion (109) exclusively through said container for dispensing of beverages (190).

According to another non-limiting aspect, said supply inlet (122) is configured and specifically destined to receive a hot and pressurized fluid from a conduit of hot fluid of said faucet (100).

According to another non-limiting aspect, at least part of said support body (108b) and/or at least part of said distributing body (108a) is configured and specifically destined to withstand said pressure.

According to another non-limiting aspect, said container for dispensing of beverages (190) is configured to contain a granulated or ground product or shredded biological product and to allow a dispensing of said product by means of an injection of fluid.

According to another non-limiting aspect, said container for dispensing of beverages (190) is of a disposable and/or re-refillable type.

According to another non-limiting aspect, said container for dispensing of beverages (190) is provided with a body substantially self-supporting or rigid.

According to another non-limiting aspect, said container for dispensing of beverages comprises a capsule.

According to another non-limiting aspect, at least one between said support body (108b) and said distributing body (108a) is configured to retain and/or contain independently of an own orientation in the space, at least part of said container for dispensing of beverages (190).

According to another non-limiting aspect, said dispensing portion (109) comprises a dispensing conduit configured to convey said beverage from said container for dispensing of beverages (190) to said container (400).

According to another non-limiting aspect, said distributing body (108a) is configured to be removably connected to said support body (108b) by means of a bayonet-like coupling and/or by means of a roto-translatory coupling.

According to another non-limiting aspect, said roto-translatory coupling comprises:
- a substantially translatory axial movement along a coupling axis (X) between said distributing body (108a) and said support body (108b), and
- a substantially rotatory movement(A) of said distributing body (108a) with respect to said support body (108b).

According to another non-limiting aspect, said substantially rotatory movement is axial to said coupling axis (X).

According to another non-limiting aspect, said substantially translatory movement comprises:
- a first purely axial translatory movement along said coupling axis (X) and wherein said distributing body (108a) and said support body (108b) are kept in a predefined position of reciprocal angular rotation on said coupling axis (X);
- a second axial translatory movement along said coupling axis (X), taking place simultaneously with said substantially rotatory movement (A).

According to another non-limiting aspect, when said distributing body (108a) and said support body (108b) are in said assembled operative configuration, preferably assembled, and more preferably by effect of said substantially translatory movement and said substantially rotatory movement, said container for distribution of beverages (190) results retained in a predefined and fixed position in said housing volume.

According to another non-limiting aspect, said device comprises a flow diverting valve (213), having an inlet receiving water from said inlet conduit (107), and having a first outlet and a second outlet.

According to another non-limiting aspect, one between said first outlet and said second outlet is connected with a recirculation conduit feeding said fluid from said first outlet or said second outlet upstream to said at least a first auxiliary heating element (188a) or is connected with a discharge conduit (214).

According to another non-limiting aspect, said flow diverting valve (213) is a temperature-controlled valve, for selecting the feeding of said first outlet or said second outlet with the fluid coming from said inlet in accordance to a temperature assumed by said fluid.

According to another non-limiting aspect, said flow diverting valve (213) is an automated, optionally mechanical, switching valve, preferably comprising a temperature-sensitive element, in particular a memory shape element, movable for determining a supply switching of said first outlet or said second outlet with the fluid coming from said inlet, and/or is a valve electronically controlled in accordance to a temperature assumed by said fluid for selecting the supply of said first outlet or said second outlet with the fluid coming from said inlet.

According to another non-limiting aspect, said first outlet is connected with said recirculation conduit or with said discharge conduit (214), and said second outlet is connected to said dispensing mouth (102).

According to another non-limiting aspect, said flow diverting valve (213) is arranged downstream of said at least one first auxiliary heating element (188a) and upstream to said dispensing mouth (102).

According to another non-limiting aspect, said discharge conduit (214) is connected to a sewage system or water disposal plant.

According to another non-limiting aspect, said hydrosanitary device (100) comprises at least one sensing element configured to identify a temperature of said dispensing body.

According to another non-limiting aspect, said hydrosanitary device (100) is configured to stop or limit a supply of said at least one first auxiliary heating element (188a), preferably by means of the action of said data processing unit (115), when a temperature of said dispensing body, measured by means of said sensing element, exceeds a predetermined maximum temperature (Tmax) allowed for said dispensing body.

In accordance to a second independent aspect, is described a data processing unit (115), configured to be operatively associated to, or associated to, or part of, a hydrosanitary device (100), optionally a hydrosanitary device (100) in accordance to one or more of the aspects herein described;
said data processing unit (115) being configured to:
- receive a signal of temperature from a temperature sensor (189) arranged in a predetermined portion of said hydrosanitary device (100), in particular in a predetermined portion of a body of dispensing of said hydrosanitary device (100),
- electronically extract from said signal of temperature a temperature value (T) of the fluid, said temperature value being measured by said temperature sensor (189);
- electronically compare said temperature value (T) with a preset target temperature (Tt), or with a preset range of target temperatures (Tt); and
- if said temperature value (T) is lower than said target temperature (Tt), or than at least a temperature of, in particular a minimum between the temperatures of, said range of target temperatures (Tt), transmit a control signal to at least a first auxiliary heating element (188a), said control signal being destined to determine an energization of said at least a first auxiliary heating element (188a) for determining an increase of the temperature of said fluid in use present in said predetermined portion of said hydrosanitary device (100), in particular in said predetermined portion of said dispensing body;
- if said temperature value (T) is equal to or above said target temperature (Tt), or a said at least a temperature of, in particular to said a minimum between the temperatures of, said range of target temperatures (Tt), stop the transmission of said control signal, or keep stopped the transmission of said control signal, or transmit a control signal to said at least a first auxiliary heating element (188a) destined to prevent or stop said energization of said at least a first auxiliary heating element (188a).

According to another non-limiting aspect, said data processing unit (115) is configured to activate said at least a first auxiliary heating element (188a) for the purpose of preventing a boiling of said fluid, preferably for the purpose of preventing a boiling of said fluid localized in correspondence of said at least a first auxiliary heater (188a).

According to another non-limiting aspect, said data processing unit (115) is configured to operate in cooperation with a boiler or primary heater element of said hydrosanitary device (100), and preferably configured to cause a preventive activation of said boiler or of said primary heater.

According to another non-limiting aspect, said boiler or primary heating element of said hydrosanitary device (100) is arranged in a position remote with respect to said predefined portion of said hydrosanitary device (100), in particular in a position remote with respect to said predetermined portion of said dispensing body of said hydrosanitary device (100).

According to another non-limiting aspect, said dispensing body constitutes a terminal portion of said hydrosanitary device (100).

According to another non-limiting aspect, said preventive activation of said boiler or of said primary heater determines a progressive heating of said fluid, in particular toward said target temperature (Tt) or toward said range of target temperatures (Tt).

According to another non-limiting aspect, said fluid heated by said boiler or by said primary heater is in a portion of said hydrosanitary device (100) that is upstreams with respect to said predefined portion of said hydrosanitary device (100).

According to another non-limiting aspect, said data processing unit (115) is configured to keep active said boiler or said first auxiliary heater concurrently with the activation of said first auxiliary heating element (188a).

According to another non-limiting aspect, electronically comparing said temperature value (T) with a target temperature (Tt) preset, or with a range of target temperatures (Tt) preset determines the generation of a data of temperature difference (ΔT), calculated between said temperature value (T) and said target temperature (Tt) or between said temperature value (T) and at least a temperature in said range of target temperatures (Tt).

According to another non-limiting aspect, said control signal determines the energization of said at least a first auxiliary heating element (188a) proportionally to said data of temperature difference (ΔT), in particular to the absolute value of said data of temperature difference (ΔT).

According to another non-limiting aspect, the data processing unit (115), if said temperature value (T) is lower than said target temperature (Tt), or than at least a temperature of, in particular a minimum between the temperatures of, said range of target temperatures (Tt), is configured to transmit said control signal at least partially simultaneously toward said first auxiliary heating element (188a) and toward a second auxiliary heater (188b), said control signal being destined to determine an energization of said first auxiliary heating element (188a) and of said second auxiliary heating element (188b) for determining an increase of the temperature of said fluid in use present in said dispensing body.

According to another non-limiting aspect, said data processing unit (115) is configured to, if said temperature value (T) is lower than said target temperature (Tt), or to at least a temperature of, in particular a minimum between the temperatures of, said range of target temperatures (Tt), transmit:
- a first control signal towards said first auxiliary heating element (188a); and/or
- a second control signal towards said second auxiliary heating element (188b); and/or
- a second control signal towards said third auxiliary heating element (188c).

According to another non-limiting aspect, said data processing unit (115), if said temperature value (T) is lower than said target temperature (Tt), or at least a temperature of, in particular a minimum between the temperatures of, said range of target temperatures (Tt), is configured to transmit a first control signal towards said first auxiliary heating element (188a) and to transmit a control signal towards said second auxiliary heating element (188b) and to regulate, by means of said first and said second control signal, a sequence of activation of said first auxiliary heating element (188a) and of said second auxiliary heating element (188b).

According to another non-limiting aspect, said first and second control signal are destined to determine an energization of said first auxiliary heating element (188a) and of said second auxiliary heating element (188b) for determining an increase of the temperature of said fluid in use present in said predefined portion of said hydrosanitary device (100), in particular in said predefined portion of said dispensing body of said hydrosanitary device (100).

According to another non-limiting aspect, the data processing unit (115) is configured to store a threshold data (Tth) indicative of a temperature difference.

According to another non-limiting aspect:
- if said temperature value (T) is lower than said target temperature (Tt), or than at least a temperature of, in particular a minimum between the temperatures of, said range of target temperatures (Tt):
   - if said data of temperature difference (ΔT) is lower than said threshold data (Tth), the data processing unit (115) is configured to transmit said control signal alternatively, preferably on a common data transmission line, to said first auxiliary heating element (188a) or to said second auxiliary heating element (188b), or transmit, alternatively, preferably on a dedicated data transmission line, said first control signal towards said first auxiliary heating element (188a) or said second control signal towards said second auxiliary heating element (188b);
   - if said data of temperature difference (ΔT) is equal to or higher than said threshold data (Tth), the data processing unit (115) is configured to transmit said control signal alternatively, preferably on a common data transmission line, to said first auxiliary heating element (188a) or to said second auxiliary heating element (188b), or transmit, simultaneously, preferably on a dedicated data transmission line, said first control signal towards said first auxiliary heating element (188a) or said second control signal towards said second auxiliary heating element (188b).

According to another non-limiting aspect, the data processing unit (115) is configured to receive in inlet a presetting signal indicating said target temperature (Tt), or said range of target temperatures (Tt).

According to another non-limiting aspect, said presetting signal is determined by, or is determined through, a valve (104) of said hydrosanitary device (100) and/or a user interface (105) of said hydrosanitary device (100).

According to another non-limiting aspect, said data processing unit (115) is configured to be operatively connected with at least a sensor configured to measure at least one among the following parameters:
- a time lapsed from a last dispensing of fluid,
- an environmental temperature,
- a type of conditioning of fluid;
said data processing unit (115) being configured to adapt said control signal in accordance to at least one of said parameters and/or to control at least one among an energization and/or a heating level supplied by said boiler (500) or primary heater and/or an opening of said valve (104) in accordance to at least one of said parameters.

In accordance to a further independent aspect, is furthermore described a method of setting of temperature of a hydrosanitary device (100), comprising:
- setting a target temperature (Tt) or range of target temperatures (Tt) of dispensing of fluid through a control element (104, 105) of said hydrosanitary device (100);
- measuring a temperature of the fluid in correspondence of a predetermined portion of said hydrosanitary device (100), through a temperature sensor (189) located in correspondence of a predetermined portion of said hydrosanitary device (100), in particular in correspondence of a predetermined portion of a dispensing body of said hydrosanitary device (100);
- receiving, from said temperature sensor (189), a temperature signal, said temperature signal indicating a temperature of said fluid in correspondence of said predetermined portion of said hydrosanitary device (100);
- electronically extracting from said temperature signal a temperature value (T) of the fluid, said temperature value being measured by said temperature sensor (189);
   - electronically comparing said temperature value (T) with said preset target temperature (Tt), or with said preset range of target temperatures (Tt); and
   - if said temperature value (T) is lower than said target temperature (Tt), or than at least a temperature of, in particular a minimum between the temperatures of, said range of target temperatures (Tt), transmit a control signal to at least a first auxiliary heating element (188a), said control signal being destined to determine an energization of said at least a first auxiliary heating element (188a) for determining an increase of the temperature of said fluid in use present in said dispensing body;
   - if said temperature value (T) is equal to or above said target temperature (Tt), or to said at least a temperature of, in particular a minimum between the temperatures of, said range of target temperatures (Tt), stop the transmission of said control signal, or keep stopped the transmission of said control signal, or transmit a control signal to said at least a first auxiliary heating element (188a) destined to prevent or stop said energization of said at least a first auxiliary heating element (188a).

According to another non-limiting aspect, said method comprises activating said at least a first auxiliary heating element (188a) preventing the boiling of said fluid, preferably for the purpose of preventing a local boiling of said fluid (188a).

According to another non-limiting aspect, the setting of said target temperature (Tt) or of said range of target temperatures (Tt) through said control element (104, 105) determines an activation of a boiler or primary heater element of said hydrosanitary device (100).

According to another non-limiting aspect, said activation of said boiler or of said primary heater determines a progressive heating of said fluid, in particular toward said target temperature (Tt) or toward said range of target temperatures (Tt).

According to another non-limiting aspect, said control element (104, 105) comprises a valve (104) for controlling of the dispensing of hot fluid, and/or a user interface (105), preferably electronic.

According to another non-limiting aspect, said valve (104) is configured to allow a setting of mass flow rate and/or of a temperature of said fluid.

According to another non-limiting aspect, said boiler or primary heater is arranged in a remote position, in particular upstream, of said predefined portion of said hydrosanitary device (100).

According to another non-limiting aspect, electronically comparing said temperature value (T) with a target temperature (Tt) preset, or with a range of target temperatures (Tt) preset determines the generation of a data of temperature difference (ΔT), calculated between said temperature value (T) and said target temperature (Tt) or between said temperature value (T) and at least a temperature in said range of target temperatures (Tt).

According to another non-limiting aspect, said control signal determines the energization of said at least a first auxiliary heating element (188a) proportionally to said data of temperature difference (ΔT), in particular to the absolute value of said data of temperature difference (ΔT).

According to another non-limiting aspect, said method comprises, if said temperature value (T) is lower than said target temperature (Tt), or than at least a temperature of, in particular a minimum between the temperatures of, said range of target temperatures (Tt), transmitting said control signal at least partially simultaneously toward said first auxiliary heating element (188a) and toward a second auxiliary heater (188b).

According to another non-limiting aspect, said control signal is destined to determine an energization of said first auxiliary heating element (188a) and of said second auxiliary heating element (188b) for determining an increase of the temperature of said fluid in use present in said dispensing body.

According to another non-limiting aspect, said method comprises, if said temperature value (T) is lower than said target temperature (Tt), or than at least a temperature of, in particular a minimum between the temperatures of, said range of target temperatures (Tt), transmitting:
- a first control signal towards said first auxiliary heating element (188a); and/or
- a second control signal towards said second auxiliary heating element (188b); and/or
- a third control signal towards said third auxiliary heating element (188c).

According to another non-limiting aspect, said method, if said temperature value (T) is lower than said target temperature (Tt), or than at least a temperature of, in particular a minimum between the temperatures of, said range of target temperatures (Tt), comprises transmitting a first control signal towards said first auxiliary heating element (188a) and transmitting a control signal towards said second auxiliary heating element (188b) and regulating, by means of said first and said second control signal, a sequence of activation of said first auxiliary heating element (188a) and of said second auxiliary heating element (188b).

According to another non-limiting aspect, said first and second control signal are destined to determine an energization of said first auxiliary heating element (188a) and of said second auxiliary heating element (188b) for determining an increase of the temperature of said fluid in use present in said predefined portion of said hydrosanitary device (100), in particular in said predefined portion of said dispensing body of said hydrosanitary device (100).

According to another non-limiting aspect, said method comprises storing a threshold data (Tth) indicative of a temperature difference, and:
- if said temperature value (T) is lower than said target temperature (Tt), or than at least a temperature of, in particular a minimum between the temperatures of, said range of target temperatures (Tt):
   - if said data of temperature difference (ΔT) is lower than said threshold data (Tth), transmitting said control signal, preferably on a common data transmission line, alternatively to said first auxiliary heating element (188a) or to said second auxiliary heating element (188b), or transmitting, alternatively, preferably on a dedicated data transmission line, said first control signal towards said first auxiliary heating element (188a) or said second control signal towards said second auxiliary heating element (188b);
   - if said data of temperature difference (ΔT) is equal to or higher than said threshold data (Tth), transmitting said control signal simultaneously, preferably on a common data transmission line, to said first auxiliary heating element (188a) or to said second auxiliary heating element (188b), or transmitting, simultaneously, preferably on a dedicated data transmission line, said first control signal towards said first auxiliary heating element (188a) or said second control signal towards said second auxiliary heating element (188b).

According to another non-limiting aspect, the method comprises a presetting signal indicating said target temperature (Tt), or said range of target temperatures (Tt).

According to another non-limiting aspect, said presetting signal is determined by, or is determined through, a selection action exerted by a user on said control element (104, 105) of said hydrosanitary device (100).

According to another non-limiting aspect, said selection takes place by means of pictograms indicative of a fluid conditioning or by means of a reading of a numeric value corresponding to a desired temperature.

According to another non-limiting aspect, said method comprises receiving electronic data from a sensor configured to measure at least one among the following parameters:
- a time lapsed from a last dispensing of fluid,
- an environmental temperature,
- a type of conditioning of fluid;
said method comprising adapting said control signal in accordance to at least one of said parameters or electronic data and/or to control at least one among an energization and/or a heating level supplied by said boiler (500) or primary heater and/or an opening of said valve (104) in accordance to at least one of said parameters or electronic data.

### Figures

The following detailed description refers to the attached figures, a short description thereof is provided below.
Figure 1 shows a front view of a kitchen faucet, arranged on a support plane and comprising a dispensing device for beverages.
Figure 2 shows an embodiment of a kitchen faucet wherein a first auxiliary heating element is arranged inside of an inlet conduit.
Figure 3 shows a different embodiment of a kitchen faucet wherein a first auxiliary heating element is arranged outside of an inlet conduit.
Figure 4 shows an embodiment of a kitchen faucet wherein an auxiliary heater is arranged in correspondence of a supply conduit of a dispensing device of beverages, in particular coffee.
Figures from 5 to 8 show some examples of containers for dispensing of beverages.
Figure 9 shows a first variant of a hydraulic circuit of the hydrosanitary device object of the present disclosure.
Figure 10 shows a schematic representation of a hydraulic circuit of the embodiment of figure 9.
Figure 11 shows a second variant of a hydraulic circuit of the hydrosanitary device object of the present disclosure.

### Detailed description

The reference number 100 indicates overall a hydrosanitary device. The attached figures show a non-limiting embodiment wherein said hydrosanitary device 100 is a faucet, in particular a kitchen faucet. Further embodiments of the hydrosanitary device here described comprise for example wall-mount shower heads, hand showerheads or faucets for shower or for bath tub.

The installation of the faucet 100 on the support surface 200 is of fixed type, or alternatively allows a relative mobility between the faucet 100 and the support surface 200.

In a non-limiting embodiment, the support surface 200 is a surface of a kitchen plane. In this case, the faucet 100 becomes a kitchen faucet.

The faucet 100 comprises a body 103 having a substantially vertical development, orthogonal with respect to the support surface 200. The body 103 is preferably but in a non-limiting extent realized in metallic material. The base 106 of the body 103 is fixed to the support 200.

The body 103 is connected to a rod or dispensing conduit 101 which is movable with respect to the body 103 and preferably is at least rotatable with respect to the body 103.

The rod or dispensing conduit 101 ends with a dispensing mouth 102 which can comprise for example and in a non-limiting extent a water aerator.

The dispensing rod 102 can comprise a shower flexible and/or extractable from the body 103.

On the body 103 is installed at least a valve 104 which allows to set at least one between a temperature of the dispensed fluid, in particular of the dispensed water, through the dispensing rod 101 and a flow rate (I/min) of said fluid, in particular of said water.

Preferably, in particular for bathroom/kitchen applications, the water is drinking water.

In a non-limiting embodiment, the valve 104 allows to carry out the two settings by means of a first rotation movement and a second rotation movement, on two different axis or planes and preferably orthogonal.

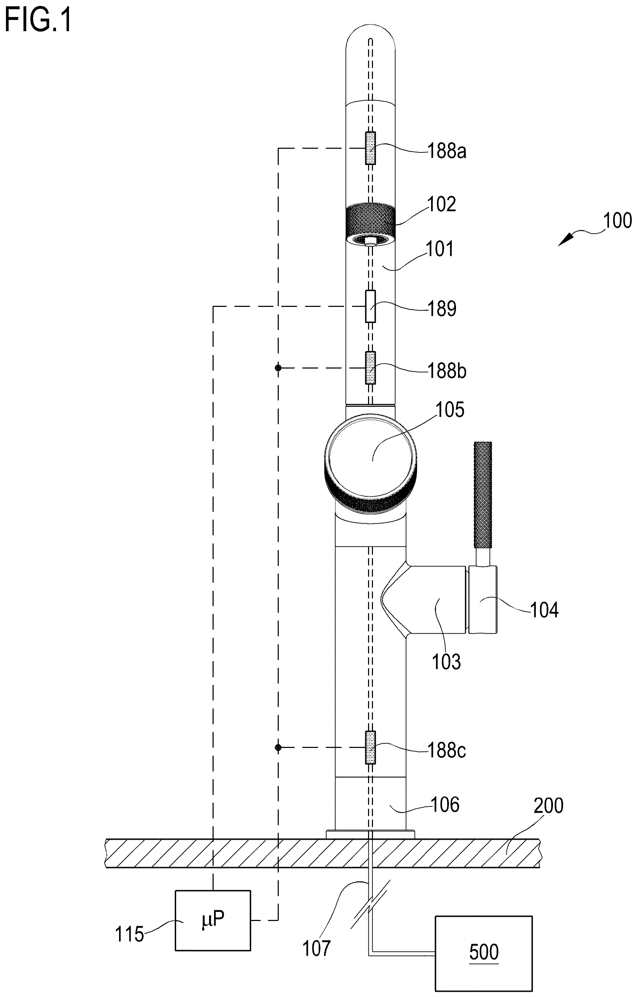

In the embodiment of figure 1, the valve 104 substantially protrudes itself laterally from the body 103, and in particular develops at least partially along a direction substantially orthogonal with respect to a main development direction of the body 103 or of the assembly formed by the dispensing rod 101 and by the body 103.

The valve 104 acts on an inlet conduit, and the rod or dispensing conduit 101 represent part of said inlet conduit 107.

The inlet conduit protrudes itself under the support surface 200 and is at least partially arranged inside of the body 103. It follows that the body 103 is at least partially hollow.

Figure 1 shows a particular embodiment of the faucet 100 wherein said faucet is configured to dispense conditioned water, for example not only more or less hot water, but also boiling water, or iced water or carbonized water.

For this purpose, the faucet 100 can comprise a user interface 105 preferably of electronic type and comprising at least one between a display and a selector, preferably a rotating selector post or around the display itself.

The selector and/or display allow the selection of the conditioning of the fluid.

Generally, then, the hydrosanitary device 100 herein described comprises a dispensing body (for example, a showerhead for a kitchen faucet) and at least one between a valve 104 for the control of the dispensing of hot fluid, preferably substantially boiling water, and a boiler 500 or primary heater for the production of hot fluid, preferably substantially boiling water.

The boiler 500 constitutes a primary heater that is conveniently arranged in a position outside with respect to the hydrosanitary device 100.

The hot fluid can be water having temperature comprised for example in the range [30-105] °C, or comprised in the range [40-101] °C. Substantially boiling water is water the temperature thereof is next to the boiling one, for example having a temperature higher than 70°C, or higher than 80°C, or higher than 90°C.

In a non-limiting embodiment, the dispensing body above described constitutes a terminal portion of said hydrosanitary device (100).

Preferably, the valve 104 and/or said boiler 500 or primary heater is connected to said dispensing body, by means of an inlet conduit 107.

The hydrosanitary device 100 herein described comprises at least a first auxiliary heating element 188a configured to act on the inlet conduit, preferably in cooperation with said valve 104 and/or boiler 500. In a preferred embodiment, the first auxiliary heating element 188a is arranged inside of the dispensing body.

Such at least one first auxiliary heating element is provided for keeping the fluid that in use flows into said inlet conduit within a predetermined range of temperatures, preferably up to the moment in which the fluid that flows in said inlet conduit from said valve 104 and/or boiler 500 reaches a temperature substantially comprised in said predetermined range of temperatures.

Such at least a first auxiliary heater 188a is destined to allow furthermore to bring the fluid, in particular the fluid that in use is in proximity of the dispensing mouth 102, or anyway of the rod or dispensing conduit 101, in said predetermined range of temperatures.

The at least a first auxiliary heating element 188a, is configured to be activated temporarily in an initial step of dispensing of said beverage and/or for a predetermined time, and/or for being activated in accordance ad at least one among the following parameters:
- a time lapsed from a last dispensing of fluid,
- an environmental temperature;
- a type of conditioning of fluid (sparkling water, filtered water, water with added flavors).

The at least a first auxiliary heating element 188a, that as it is clear from the preceding description compensates for a lack of temperature of the dispensed fluid by intervening in heating this latter for example downstream of the valve 104, and/or boiler 500, is conveniently of electrical type.

Optionally, although preferably, the hydrosanitary device 100 can be provided with a control system suitable for preventing an excessive overheating of the at least a first auxiliary heating element.

In a non-limiting embodiment, the range of temperatures above mentioned is [92-96] °C or is [70-80] °C.

In some embodiments, it can be convenient providing the hydrosanitary device 100 with a plurality of auxiliary heating elements. Figure 1 shows a configuration wherein it is present a first auxiliary heating element 188a, a second auxiliary heating element 188b and a third auxiliary heating element 188c.

As it can be seen from figure 1, also the second auxiliary heating element 188b and the third auxiliary heating element 188c are arranged inside of the dispensing body.

In a preferred embodiment, also the second auxiliary heating element 188b and the third auxiliary heating element 188c are electrically fed.

For example, at least one between the first auxiliary heating element 188a, the second auxiliary heating element 188b and the third auxiliary heating element 188c comprises a Peltier cell.

Considering the direction with which the fluid flows in the inlet conduit 107, for example the first auxiliary heating element 188a and the second auxiliary heating element 188b can be arranged in series, or equivalently in sequence.

This technical feature allows to have a heating localized on multiple points and advantageously prevents localized heatings of the fluid, that for example could bring to a localized boiling of the fluid, inside of the inlet conduit 107.

In particular, the at least a first auxiliary heating element 188a and optionally the second auxiliary heating element 188b are activated such as to prevent a localized boiling of the fluid at least in correspondence of the respective position thereof.

Furthermore, this technical feature allows to reduce the risk of excessive heating also for the auxiliary heaters themselves.

Conveniently, the hydrosanitary device 100 object of the present disclosure can be provided with a data processing unit, for example integrating a processor of general purpose type, or a ASIC, or a PLC controller, or a FPGA, or can be operatively (electrically and/or optically) connected with a data processing unit.

The data processing unit 115 advantageously controls in an at least partially automated way the functioning of the at least a first auxiliary heating element 188a.

In particular, the data processing unit 115 controls the dispensing of power provided to the at least a first auxiliary heating element 188a and, optionally, also to the second auxiliary heater 188b for allowing to regulate the heating of the water destined to the production of the beverage. The data processing unit 115 controls the activation sequence of the first auxiliary heater 188a and of the second auxiliary heater 188b.

In a simple embodiment, the data processing unit is destined to simply allow a temporized activation or deactivation of the first auxiliary heating element 188a, or when present of the second auxiliary heating element 188b and/or of the third auxiliary heating element 188c, with a predetermined electric power.

In this way, the data processing unit 115 is configured to control one or more of said auxiliary heaters for keeping the fluid that in use flows into the inlet conduit 107 within the predetermined range of temperatures.

The data processing unit 115 can be operatively connected with, and in use act in control on, the boiler 500 and/or the valve 104 for regulating the temperature and/or the flow of the fluid on the inlet conduit 107 and can be connected (electrically, optically) with one or more sensors for measuring at least one among the following parameters: environmental temperature, type of conditioning of fluid, in particular type of conditioning of water, and time lapsed from the last dispensing of fluid. As a function of such parameters, and in accordance to the predetermined calculation algorithms, the data processing unit 115 can advantageously regulate the supply of energy supplied by the first auxiliary heating element 188a (and, if present, by the second auxiliary heating element 188b and/or third auxiliary heating element 188c), and/or an activation thereof, or an activation or setting of the power and/or flow rate of the boiler 500 and/or of the valve 104.

In a more complex embodiment, the data processing unit 115 is destined to control an electric power supplied to the first auxiliary heating element 188a, or where present to the second auxiliary heating element 188b and/or the third auxiliary heating element 188c, for modulating the localized heating of the fluid according to specific needs, for example, according to a volume of the inlet duct 107 and/or of the speed of fluid flow in the duct itself.

The data processing unit 115 can be configured to allow a selective activation of the first auxiliary heating element 188a, of the second auxiliary heating element 188b and of the third auxiliary heating element 188c, when these latter two are present. In this case a simultaneous activation of two auxiliary heating elements is not possible.

In a more complex embodiment, the data processing unit 115 can be configured to allow a simultaneous activation of the first auxiliary heating element 188a and of the second auxiliary heating element 188b, or for example of the second auxiliary heating element 188b, and of the third auxiliary heating element 188c.

With the simultaneous activation there can be a time-varying adaptation of the electric power supplied to one or more of the mentioned auxiliary heaters.

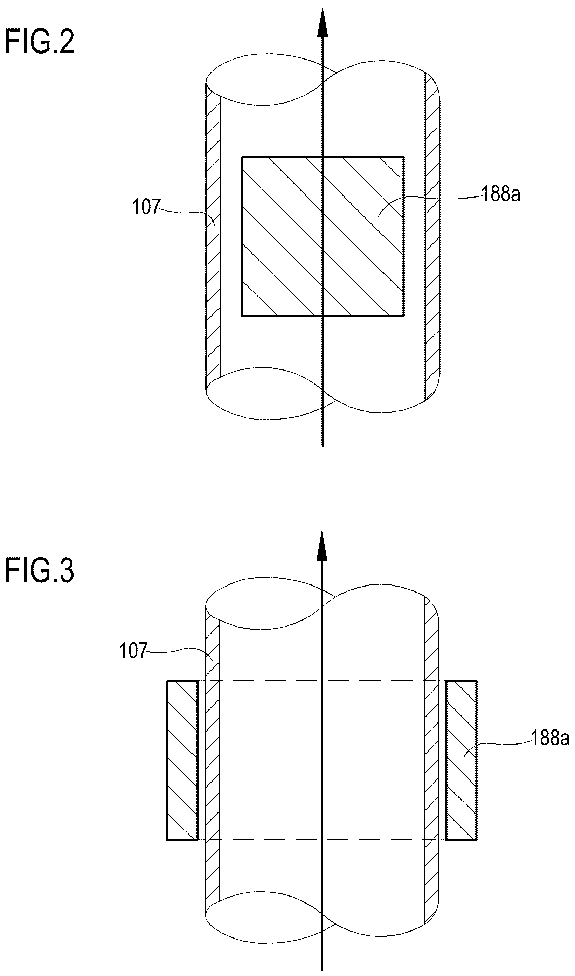

As schematically represented in figure 2, in an embodiment the at least a first auxiliary heating element 188a can be arranged inside of the inlet conduit 107.

In this case the first auxiliary heating element 188a is placed in direct contact with the fluid that flows in the conduit, but is conveniently electrically insulated for preventing a transfer of electric energy towards the fluid.

In an alternative embodiment, represented in figure 3, the first auxiliary heating element 188a is arranged outside of the inlet conduit 107.

In this case the first auxiliary heating element 188a is not in direct contact with the fluid that flows in the conduit, but transfers thermal energy to the fluid through the walls of the conduit that conveniently must be thermally conductive.

The hydrosanitary device 100 object of the present disclosure can conveniently comprise a temperature sensor of known type, identified by the reference number 189.

Preferably, although in a non-limiting extent, the temperature sensor is a quick response sensor; for example, such sensor is a quick response NTC sensor. In some embodiments, the temperature sensor can be a sensor of contactless type.

The temperature sensor 189 is destined to measure a temperature of the fluid in the inlet conduit 107. The temperature sensor 189 can be conveniently arranged in substantial correspondence of the dispensing mouth 102, or be in any case configured to measure a temperature of the fluid in substantial correspondence of the dispensing mouth 102.

The measurement can be of direct (temperature sensor 189 arranged inside of the conduit) or indirect type (temperature sensor 189 arranged outside and in contact with the conduit).

The temperature sensor 189 is operatively (electrically and/or optically) connected with the data processing unit, and is thus configured to transmit a control signal suitable for determining a control of the at least a first auxiliary heating element 188a so that this latter acts on the inlet conduit, preferably in cooperation with said valve 104 and/or boiler 500, for keeping the fluid that in use flows within the inlet conduit within the predetermined range of temperatures.

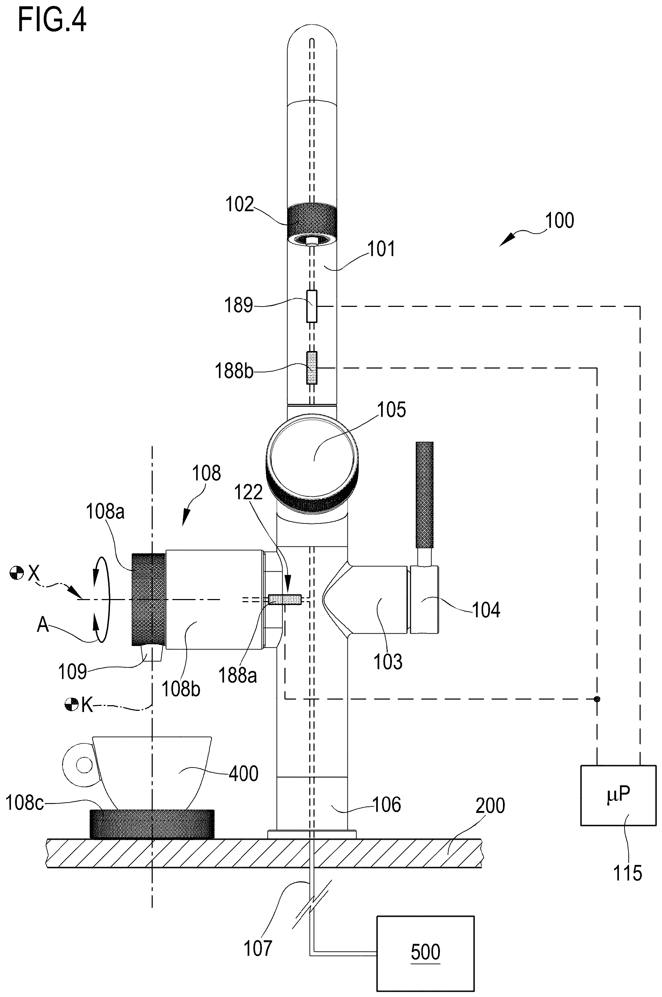

A particular embodiment of the hydrosanitary device 100 herein described is a faucet provided with a dispensing device of beverages 108. This embodiment is schematically shown in figure 4.

The device identified by the reference number 108 is a dispensing device for beverages extracted from containers for beverages, in particular disposable and/or re-refillable containers.

The dispensing device 108 is configured to, and specifically destined to, be coupled to the faucet, and differs then with respect to the dispensing devices such as coffee machines or the like, which are instead so-called "stand-alone" devices.

Even if destined to be integrated on the faucet, the distributing device 108 is capable of being used also in a separate way with respect to the traditional functionalities typical of the faucet, in particular relating to the dispensing of fluid, in particular cold, hot or conditioned water.

For this reason, the faucet that integrates the distributing device 108 is further usable as a coffee machine.

In the embodiment shown in the attached figures, the valve 104 and the support body 108b are arranged at a substantially identical height and are positioned at two opposite sides of the body 103 of the faucet.

A first component of the distributing device 108 is the support body 108b, which is configured to be coupled, in particular directly coupled, and more in particular fixed, to the body 103 of the faucet 100.

A second component of the distributing device 108 is the distributing body 108a, which is configured to be removably connected to said support body 108b.

The support body 108b receives water from the inlet conduit 107, in particular from a branch thereof that is defined supply conduit 122 for the distributing device 108.

The distributing body 108a comprises a dispensing portion 109 configured to allow a distribution of a beverage in a container 400.

The ideal axis of dispensing of the beverage in the container 400 is identified with letter K.

Figure 4 shows furthermore the presence of a dispensing plate 108c that is positioned on the support surface 200 and that is for example realized in a plastic and/or metallic material.

The dispensing plate 108c is arranged below the dispensing portion, for example axial with the dispensing ideal axis K.

The purpose of the dispensing plate 108c is to collect part of the beverage that during the dispensing could come out from the container 400.

The container 400 is a container specifically destined to allow the user to drink the beverage directly from the container itself. For example, and in a non-limiting extent, the container 400 is a coffee cup.

Preferably, but in a non-limiting extent, the faucet 100 of the present disclosure is configured to keep the support body 108b at a predetermined height with respect to the support surface 200. Figure 1 shows an example of faucet which distinguishes by virtue of this feature.

Further examples of faucet 100, that anyway are not shown in the attached figures, are configured to allow a setting of a height assumed by the support body 108b with respect to the support surface 200. In particular, the support body 108b can translate vertically on the body 103 of the faucet 100 between a first and lower height and a second higher height. The first lower height can put for example the support body 108b and, when coupled, the distributing body 108a, at a height substantially proximate to a coffee cup arranged on the support surface 200. The setting of the height above described reflects in a setting of the height assumed by the dispensing portion 109.

The support body 108b develops along a substantially oblique direction with respect to the development direction (substantially vertical) of the body 103 of the faucet and/or with respect to the development direction overall defined by the assembly formed by the body 103 and by the dispensing rod 101.

The distributing body 108a is removably connectible to said support body 108b along the substantially oblique direction and/or along the direction axial to the development axis of the support body 108b.

The embodiment shown in the attached figures shows a solution wherein the distributing body 108a is removably connectible to the support body 108b along a direction substantially axial to the axis of a flow of the fluid that flows through the container for dispensing of beverages 190.

Before entering in the detailed description of the various components of the distributing device 108, some embodiments of containers for dispensing of beverages will be hereinafter described.

Reference is made to figures from 5 to 8.

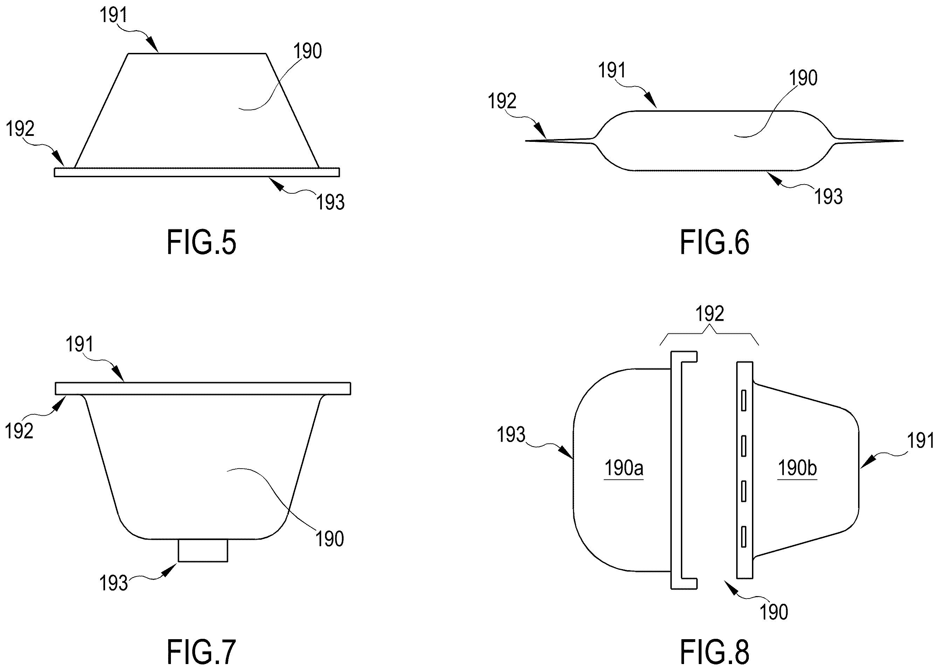

A first example of container for dispensing of beverages 190 is described in figure 5. Such container for dispensing of beverages 190 assumes a substantially truncated-cone capsule shape and is preferably of "disposable" type. In use the container for dispensing of beverages 190 is appropriately thrown into the garbage.

The capsule has a lateral wall, a head wall 191 and a bottom wall, opposed to the head wall and that realizes a dispensing portion 193. The dispensing portion 193 is the one from which, in use, exits the beverage by effect of the introduction of the fluid in the internal volume of the capsule.

The internal volume of the capsule is defined by the head wall, by the lateral wall and by the bottom wall.

As it is visible in figure 5, the head wall 191, of substantially discoidal and planar shape, is joined in correspondence of an annular upper ring of the lateral wall. The bottom wall, of substantially discoidal and planar shape too, is joined in correspondence of an annular lower ring of the lateral wall.

The capsule comprises a ring 192, which realizes an engagement portion for the capsule in mechanisms that determine the retention thereof at a predetermined position. Preferably the ring is substantially rigid. The engagement portion is a peripheral portion. In the case of the embodiment of figure 5, the engagement portion is arranged in correspondence of an ending of the capsule. Anyway, the engagement portion could be further arranged in correspondence of an intermediate portion of the lateral wall of the capsule (referred to the average direction of infusion between the head wall 191 and the dispensing portion 193).

All the walls of the capsule are substantially airtight, and this allows a long preservation of the granulate therein contained. The body of the container for dispensing of beverages 190 is in this case realized in plastic material and in particular can be realized in plastic material specifically destined to provide an oxygen barrier, for the purpose of preserving the aroma of the granulated or shredded product therein contained as long as possible.

Anyway, at least one between the upper wall and the lower wall are configured to be pierced by piercers which determine the possibility for the fluid, in particular for the water, to wet the granulated product contained in the internal volume of the capsule for extracting aromas and determine the possibility of extraction of the beverage preferably from a direction substantially opposite with respect to the one of introduction of the fluid.

Figure 6 shows a container for dispensing of beverages 190 of substantially discoidal shape, formed by the juxtaposition of an upper portion that realizes the head wall 191 and of a lower portion that realizes the dispensing portion 193. The upper portion and the dispensing portion are substantially identical and of substantially specular shape and have each one an annular peripheral portion preferably of circular shape.

The upper portion and the dispensing portion are between them joined for example by means of ultrasound welding in correspondence of the peripheral annular portion.

Cambers present on the central area of the upper portion and on the dispensing portion define the internal volume of the capsule.

As clearly visible in figure 6, this capsule is reversible - i.e. it can be turned upside down by 180° - transforming the dispensing portion in head wall and vice versa.

The upper portion and the lower portion can be substantially insulating (for example, realized in a plastic/aluminum assembly) or comprising a porous material (for example, cellulose) to allow the passage of the beverage.

Also in this case the upper portion and/or the lower portion can be pierced through at least one piercer to allow the extraction of the beverage.

Also the container for dispensing of beverages 190 of figure 6 is preferably of "disposable" type.

Figure 7 shows a further variant of a container for dispensing of beverages 190, with a substantially rigid bowl-shaped body. At the upper part, the lateral wall - which defines a preferably substantially circular transversal section - has a closing lip that defines a head wall 191, and has a ring 192 that realizes an engaging portion of the capsule.

At a lower part, the bowl is tapered and has a dispensing portion 193 in the form of a small conduit or spout, substantially rigid too. The dispensing portion 193 can be provided with a sealing lip, arranged in a distal position and accessible from the outside of the capsule or in a position inside the bowl.

The sealing lip can be fractured by the action of a piercer or by the action of the pressure exerted by the fluid that is introduced into use from the capsule in correspondence of the head wall 191.

The capsule of figure 7 is preferably of "disposable" type.

Finally, a further variant of container for dispensing of beverages 190 is shown in figure 8. This is a container for dispensing of beverages 190 of reusable type.

In this case the container for dispensing of beverages 190 has a first body 190a and a second body 190b, for example, of substantially bowl-shaped form, removably assemblable in correspondence of their contact portions which - when the container is in assembled configuration - determine the realization of a ring 192 that realizes an engaging portion of the capsule.

On the first body 190a is defined a dispensing portion 193 and on the second body 190b is defined a head portion 191.

The granulated or shredded product is introduced into at least one between the first body 190a and the second body 190b. At this point, the two bodies can be coupled to realize the capsule herein described, ready to be introduced into the dispensing device 108 object of the present disclosure.

The container for dispensing of beverages 190 must not be considered necessarily closed or closable or provided with couplable portions so as to define a substantially closed chamber.

The container for dispensing of beverages 190 can be of a substantially open type and provided, for example, with a cup or funnel conformation. In a tapered portion, this cup or funnel defines the dispensing portion 193, which can have a plurality of small holes destined to allow the passage of the water that has been enriched by the aroma of the granulated product, but which substantially prevents the passage of the granulated product itself.

A non-limiting embodiment of the container for dispensing of beverages 190 can be specifically destined to be filled with a granular product through a teaspoon, and can assume the shape of a funnel or filter for Moka.

Generally, at least one between said support body 108b and said distributing body 108a is configured to retain and/or contain at least part of a container for dispensing of beverages 190.

A preferred embodiment comprises a support body 108b configured to contain substantially the whole container for dispensing of beverages 190, while the distributing body 108a retains said container for dispensing of beverages 190 in a removable way, but the container for dispensing of beverages 190 is not substantially introduced in the distributing body 108a.

Due to the fact that the support body 108b and the distributing body 108a are removably connectible, it is clear that the dispensing device 108 herein described has:
- an assembled operative configuration, wherein said support body 108b and said distributing body 108a are coupled for allowing a dispensing of said beverage by making said fluid flow from said supply inlet 122, into said container for dispensing of beverages 190, and from the latter towards said dispensing portion 109, and
- a disassembled operative configuration, wherein said support body 108b and said distributing body 108a are uncoupled and allow an access to said container for dispensing of beverages 190.

Clearly, the assembled operative configuration and the disassembled operative configuration are alternative. In the disassembled operative configuration, the container for dispensing of beverages 190 is freely couplable or uncouplable to at least one among the support body 108b and the distributing body 108a.

The name "support body" is given by the fact that such body supports and in particular sustains the distributing body 108a when thereto connected.

The name "distributing body" is given by the fact that such body is mainly targeted to finalize the dispensing of the beverage in the container 400.

When the support body 108b and the distributing body 108a are in assembled operative configuration, the container for dispensing of beverages 190 results interposed, in particular compressed and/or blocked, between the support body 108b and the distributing body 108a.

In view of this it appears clear that the support body 108b and the distributing body 108a, when coupled in the assembled operative configuration, overall define a housing volume configured to contain, preferably completely, the container for dispensing of beverages 190.

In use the fluid flows from the supply inlet 122 within the support body 108b, and in particular flows inside of the cavity of the support body itself. The fluid, therefore, flows substantially entirely inside of the container for dispensing of beverages 190, and from this latter flows in the distributing body 108a to be finally dispensed into the container 400.

Inside of the container for dispensing of beverages 190 there is a granulated product that comprises which comprises, for example, ground coffee beans or parts of leaves of plants such as tea. This granulated product offers a resistance to the free flow of the fluid, and thus a counterpressure to the supply inlet 122.

The flow of fluid, particularly the flow of water, permeates the granulated product and some aromatic substances are extracted from the granulated product itself, partly due to the fact that this flow of water is preferably hot.

This results in a flavored liquid, the beverage, which exits the container for dispensing of beverages 190 and is dispensed through the dispensing portion 109 in container 400. Figure 4 shows a container 400 in the form of a coffee cup. The container for dispensing of beverages 190 can generally be configured to also hold a shredded organic product.

Consequently, the faucet 100 described herein is preferably configured to dispense the beverage into a container 400 destined to allow a direct intake of the beverage by the user.

Various coupling modes between the distributing body 108a and the support body 108b have been conceived.

A first coupling mode between the distributing body 108a and the support body 108 provides for a purely axial insertion of at least part of one of the two within the other.

A second coupling mode between the distributing body 108a and the support body 108b provides for a juxtaposition between these two, and the retention in the coupled configuration is determined by engagement means that rigidly engage the distributing body 108a to the support body 108b.

A further coupling mode provides for a bayonet-like coupling. The bayonet-like coupling is a rototranslatory coupling that comprises:
- a substantially translatory axial movement along a coupling axis X between said distributing body 108a and said support body 108b, and
- a substantially rotatory movement of said distributing body 108a with respect to said support body 108b.

The rototranslatory movement could also be a screwing movement, but specifically when in bayonet-like form, the translatory movement has a first part and a second part, and specifically comprises:
- a first purely axial translatory movement along said coupling axis X and wherein said distributing body 108a and said support body 108b are kept in a predefined position of reciprocal angular rotation on said coupling axis X;
- a second axial translatory movement along said coupling axis X, taking place simultaneously with said substantially rotatory movement A.

The effect of the aforementioned movements is to determine a retention of the container for dispensing of beverages 190 in a predetermined and fixed position within the housing volume and to allow that when the fluid is supplied to the dispensing device 108 described herein, such fluid - not substantially finding space in any gaps present between the outer surface of the container for dispensing of beverages 190 and the surfaces of the housing volume defined by the cavity altogether defined by the dispensing body 108a and the support body 108b and the striker surface against which the container for dispensing of beverages 190 is at least partially resting - is exclusively caused to transit within the container for dispensing of beverages190.

Previously it has already been described that some embodiments of the container for dispensing of beverages 190 are configured to be pierced for allowing the dispensing of the beverage in the container 400.

It is in view thereof that in at least an embodiment of the dispensing device 108, at least one among said support body 108b and said distributing body 108a is configured to pierce or to determine a piercing of at least part of said container for dispensing of beverages 190 when said dispensing device of beverages 108 is brought from said disassembled operative configuration to said assembled operative configuration.

In this case, the first auxiliary heating element 188a is arranged in correspondence of the supply inlet 122, while a second auxiliary heating element 188b is arranged in correspondence of the conduit that brings water to the supply inlet 122 and a third auxiliary heating element 188c is arranged in correspondence of the cavity 120c. Such heaters can be present all together or can be present only in part.

From an operative point of view, the present disclosure describes a method of setting of the fluid temperature that is at least partially executed by means of the data processing unit 115.

The method first of all provides for setting a target temperature Tt [°C] through the valve 104 and/or the user interface 105, which - considered overall - can be considered as control elements 104, 105 of the hydrosanitary device 100.

In particular, the method herein described can provide that an action on the control element 104, 105, that is on the valve 104 and/or on the user interface 105, determines the selection of a specific and preventively stored target temperature Tt among a plurality of specific and preventively stored target temperatures Tt or a range of target temperature Tt among a plurality of specific and preventively stored intervals of target temperature Tt.

The selection can take place by means of pictograms indicating a conditioning of fluid or can take place by means of a reading of a numeric value, corresponding to the desired temperature.

The method, subsequently, provides for measuring the temperature of the fluid in proximity of the dispensing mouth 102, in correspondence of the dispensing body or of the rod or dispensing conduit 101, and thus in a predetermined point anyway close to a dispensing portion of fluid of the hydrosanitary device 100, and such measurement can be conveniently carried out by means of the temperature sensor 189 previously described.

Conveniently, thus, the measurement of the temperature is an electronic measurement.

The method, therefore, comprises transmitting a signal of temperature from the temperature sensor 189 to said data processing unit 115, wherein the temperature signal is proportional to the, and anyway indicative of the, temperature T of the fluid in the measurement point or anyway contains data related to the temperature T of the fluid in the measurement point.

With specific reference to the case wherein the value of target temperature is precise (not a range), the method at this point provides for a comparison, in particular an electronic comparison, between the temperature value T determined by the control signal and the target temperature Tt:
- if T< Tt, it will be necessary energizing at least one among the first auxiliary heating element 188a, the second auxiliary heating element 188b and the third auxiliary heating element 188c for the purpose of providing thermal energy to the fluid in correspondence of the heating element;
- if T ≥ Tt, it will not be necessary to energize any auxiliary heating elements.

If, on the other hand, work is being done with respect to a target temperature range, at least one predefined temperature within the target temperature range Tt will be set, and the comparison with the temperature value T will be made with respect to the predefined temperature within the range, which, for example, may be the minimum among the above temperatures.

The method provides for cyclically measuring, at predetermined time intervals, the fluid temperature in correspondence of the temperature sensor 189 in the above described ways, and also comprises performing again, downstream of the measurement, the previously mentioned comparison.

The method may advantageously provide for regulating the energization of at least one among the first auxiliary heating element 188a, the second auxiliary heating element 188b, and the third auxiliary heating element 188c in order to provide the thermal energy to the fluid in correspondence of the auxiliary heating element to an extent proportional to the difference ΔT= | T - Tt |.

In this embodiment, the greater this difference is, the greater the energization supplied to the auxiliary heating element (for example, the greater this difference is, the greater the electric current or voltage supplied to said heating element is).

The method may also provide, by means of the data processing unit 115, for at least the partially simultaneous activation (energization) of a first and a second auxiliary heating element; it may advantageously defined a threshold Tth, representing a maximum temperature difference below which it is sufficient the activation of one between the first auxiliary heating element 188a, the second auxiliary heating element 188b and the third auxiliary heating element 188c in order to provide thermal energy to the fluid.

In mathematical terms, the threshold Tth is given by: Tth=max (ΔT) to activate only one auxiliary heater at a time.

Above the threshold Tth it will be necessary to activate at least partially simultaneously a plurality of auxiliary heating elements, for example, the first and the second, or the second and the third, auxiliary heater.

The above-described operation can be carried out by means of a single control signal (control signal) or by means of separate control signals on separate lines for each auxiliary heating element (first control signal, second control signal, etc...).

The energization of the at least one among the first, the second and the third auxiliary heating elements 188a, 188b, 188c conveniently occurs by means of a control signal that can be transmitted on a single common control line for the plurality of auxiliary heating elements 188a, 188b, 188c.

Alternatively, separate control signals may be transmitted for each auxiliary heater element 188a, 188b, and 188c, preferably transmitted on control lines each one dedicated to a respective auxiliary heating element. Thus, in this case a first control signal will be available for the first auxiliary heating element 188a, a second control signal for the second auxiliary heating element 188b, and so on. The control lines may be at least partially wireless.

The method according to the present disclosure also may include receiving electronic data from at least one sensor of electronic type, preferably from a plurality of electronic sensors, destined to measure at least one of the following parameters:
- a time lapsed from a last dispensing of fluid,
- an environmental temperature,
- a type of conditioning of fluid.

The method according to the present disclosure comprises adapting, in particular in an automated way, the control signal to at least one of the above parameters, and thus in accordance with the electronic data received from, or by, the sensor(s) described above.

The method further may include controlling the energization and/or a heating level provided by the boiler 500, and/or controlling and adapting an opening level of valve 104 in accordance with at least one of the parameters described above.

In view of the above, it therefore appears clear that with the present description is disclosed a data processing unit 115, configured to be operatively associated with, or associated with, or part of, a hydrosanitary device 100 such as that described herein.

The data processing unit 115 comprises at least one control input configured to receive at least one temperature control signal and at least one output for controlling at least one first auxiliary heating element 188a disposed in a dispensing body of the hydrosanitary device 100.

The input and output described above may be physical or virtual.

The data processing unit 115 is first of all configured to receive a signal of temperature from a temperature sensor 189 arranged in a predetermined portion of said hydrosanitary device 100, in particular in a predetermined portion of a dispensing body of said hydrosanitary device 100.

The temperature signal, according to the specific type of temperature sensor that will be used, may be an analog signal or a digital signal.

The data processing unit 115 is also configured to electronically extract from the temperature signal a temperature value T of the fluid; clearly, temperature sensor 189 is destined to measure this value.

The data processing unit 115 is configured to electronically compare, and in particular cyclically as described in the preceding portion of the description, the temperature value T with a preset target temperature Tt, or with a preset target temperature range Tt.

If the temperature value T is below the target temperature Tt, or the target temperature range Tt, the data processing unit 115 transmits a control signal to at least one first auxiliary heating element 188a.

The control signal is destined to determine an energization of the at least a first auxiliary heating element 188a in use present in the dispensing body.

If the temperature value (T) is equal to or above said target temperature Tt, or to said range of target temperatures (Tt), the data processing unit 115 stops the transmission of the control signal, or keeps stopped the transmission of said control signal, or transmits a control signal to said at least a first auxiliary heating element (188a) destined to prevent or stop said energization of said at least a first auxiliary heating element 188a.

More particularly, the electronical comparison carried out by the data processing unit 115 between the temperature value T with the target temperature Tt preset, or with the range of target temperatures Tt preset determines the generation of a data of temperature difference ΔT, calculated between the temperature value T and the target temperature Tt or between the temperature value T and at least a temperature in the range of target temperatures Tt.

The control signal determines the energization of the at least a first auxiliary heating element 188a, proportional to the data of temperature difference ΔT, in particular to an absolute value of the data of temperature difference ΔT: the greater this temperature difference is, the greater the thermal power supplied by the auxiliary heating element to the fluid is.

In a embodiment, if the temperature value T is lower than the target temperature Tt, or than the range of target temperatures Tt, by means of the data processing unit 115, the control signal is transmitted at least partially simultaneously towards the first auxiliary heating element 188a and towards the second auxiliary heater 188b and, if present and optionally, also verso the third auxiliary heating element 188c.

The wording "at least partially" indicates that the control signal of the first auxiliary heating element can be long as the second control signal of the second auxiliary heating element, or that one of the two transmissions can be longer than the other.

The control signal is destined to determine an energization of said first auxiliary heating element 188a and of said second auxiliary heating element 188b for determining an increase of the temperature of the fluid in use present in the dispensing body.

The above presupposes a single control signal whose data allow to distinguish between a destination aimed at the first, or second, auxiliary heating element.

The data processing unit 115 can be configured to, if the temperature value T is lower than the target temperature Tt, or the target temperature range Tt (lower than the minimum temperature of that range), transmit:
- a first control signal towards the first auxiliary heating element 188a;
- a second control signal towards the second auxiliary heating element 188b;
- a third control signal towards the third auxiliary heating element 188c.

In this case, the first and second control signal are destined to determine an energization of the first auxiliary heating element 188a (first control signal) and of said second auxiliary heating element 188b (second control signal) for determining an increase of the temperature of the fluid in use present in the dispensing body.

The data processing unit 115 can be configured to store a threshold data Tth indicative of a temperature difference.

In this case:
- if the temperature value T is lower than the target temperature Tt, or than the minimum temperature of the range of target temperatures Tt:
   - if said data of temperature difference ΔT is lower than the threshold data Tth, the data processing unit 115 is configured to transmit the control signal alternatively to the first auxiliary heating element 188a or to the second auxiliary heating element 188b, or transmit, alternatively, the first control signal towards the first auxiliary heating element (188a) or the second control signal towards said the auxiliary heating element 188b;
   - if the data of temperature difference ΔT is equal to or higher than the threshold data Tth, the data processing unit 115 is configured to transmit the control signal simultaneously to the first auxiliary heating element 188a or to the second auxiliary heating element 188b, or transmit, simultaneously, the first control signal towards the first auxiliary heating element 188a or the second control signal towards the second auxiliary heating element 188b.

Clearly, in case there is more than two auxiliary heater elements, if the data of temperature difference ΔT is lower than the threshold data Tth, the data processing unit 115 is configured to transmit the control signal alternatively to two of the n auxiliary heater elements, for example to the first and second auxiliary heating element, to the first and third auxiliary heating element, to the second and third auxiliary heating element.

In a non-limiting embodiment, the data processing unit 115 is configured to receive in inlet a presetting signal indicating the target temperature Tt, or the range of target temperatures Tt.

In this case, the presetting signal is determined from, or is determined by means of, the valve 104 and/or the user interface 105.

Clearly, the data processing unit 115 can be configured to operate in time simultaneity with the boiler or primary heater of the hydrosanitary device 100.

As it appears clear from the present description, the boiler 500 or primary heater is arranged in an initial portion of the hydrosanitary device 100, and anyway a portion of the hydrosanitary device 100 that is upstreams with respect to the portion in correspondence of which (or upstreams of the plurality of positions in correspondence of which), is the first auxiliary heating element 188a or of which is the plurality of auxiliary heating elements.

The "upstreams" direction is referred with respect to the direction of the water flow.

Conveniently the data processing unit 115 operates in time simultaneity with the activation of the boiler or primary heater, which progressively heats the fluid toward a temperature substantially corresponding to the target temperature Tt or toward a range of temperatures substantially corresponding to the range of target temperatures Tt.

Thus, in use the boiler or primary heater is activated and subsequently, through the temperature sensor 189 is measured the temperature in the predetermined portion of the hydrosanitary device 100.

If such temperature is not yet the target one, as above described, it is activated the at least a first auxiliary heating element 188a, or the plurality of auxiliary heating elements, that thus operates in substantial temporal simultaneity with the boiler or primary heater.

The data processing unit 115 can optionally be operatively connected with, and receive electronic data from, at least one sensor of electronic type, preferably from a plurality of electronic sensors, destined to measure at least one of the following parameters:
- a time lapsed from a last dispensing of fluid,
- an environmental temperature,
- a type of conditioning of fluid.

The data processing unit 115 herein described can optionally be configured to adapt, in particular in an automated way, the control signal to at least one of the above parameters, and thus in accordance with the electronic data received from, or by, the sensor(s) described above.

The data processing unit 115 can be configured to control the energization and/or a heating level provided by the boiler 500, and/or control and adapt an opening level of the valve 104 in accordance with at least one of the parameters described above.

A particular and non-limiting embodiment of the device herein described is configured to prevent an excessive heating of the dispensing body. This technical feature allows to reduce the risk of burns for the user; in fact, the dispensing body can be in use directly touched by the user.

This technical feature can be advantageously implemented for those cases wherein there is a legal regulation concerning the maximum temperatures reachable for bodies of hydrosanitary elements that can be directly contacted by a user.

To this end, the hydrosanitary device herein described can comprise a sensor configured to measure a temperature of a portion of the dispensing body, or anyway configured to allow the data processing unit 115 to determine in an indirect way the temperature assumed by at least a portion of the dispensing body on the basis of the assumed temperature, in particular in real time, from the fluid that flows in the dispensing body through the inlet conduit.

It seems clear that the sensor described in the previous paragraph is operatively (electrically, optically) connected to data processing unit 115.

The above-mentioned sensor can be the temperature sensor 189 previously described.

The data processing unit 115 is configured to store a data indicative of a maximum allowable temperature Tmax for said dispensing body or to access an external memory in which there is said data indicative of a maximum allowable temperature Tmax for said dispensing body.

The data processing unit 115 cyclically, carries out an electronic comparison between the data indicative of a maximum allowable temperature Tmax for the dispensing body and the temperature data detected by the sensor above and:
- if the temperature detected by the sensor is lower than or equal to the maximum allowable temperature Tmax, the data processing unit 115 keeps the possible activation, or allows the possible activation, of at least one among the first auxiliary heater 188a, the second auxiliary heater 188b, and the third auxiliary heater 188c;
- if the temperature detected by the sensor is higher than or equal to the maximum allowable temperature Tmax, the data processing unit 115 forces the deactivation of at least one among the first auxiliary heater 188a, the second auxiliary heater 188b, and the third auxiliary heater 188c.

The hydrosanitary device 100 object of the present disclosure can be configured to recirculate part of the fluid flowing into the inlet conduit 107 until such fluid has reached a predetermined threshold temperature, specifically a predetermined switching temperature Tsw that may conveniently be included in the predetermined target temperature range previously mentioned.

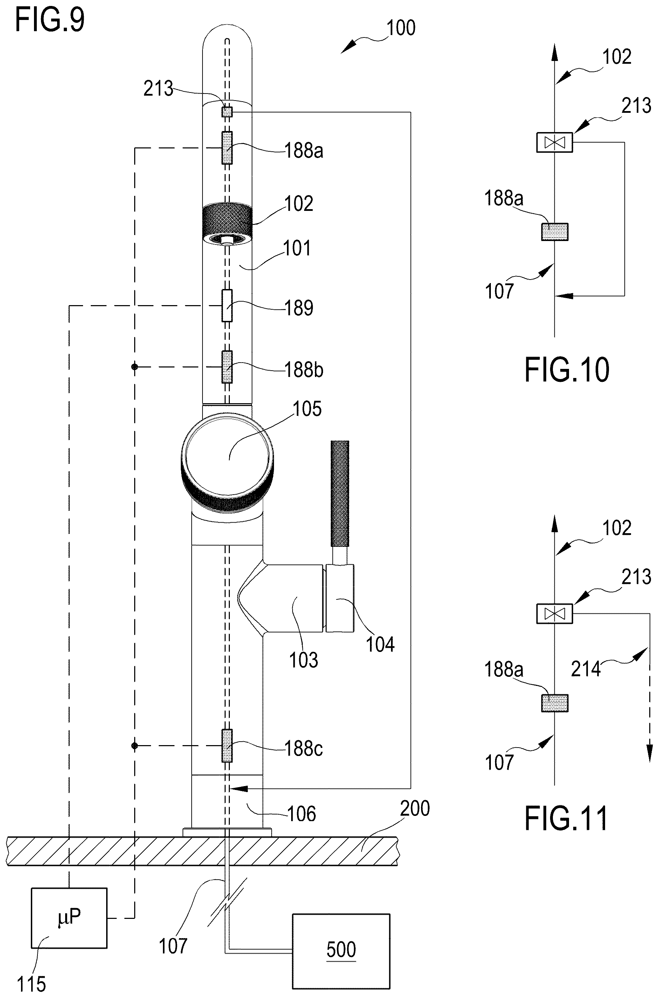

As shown in figure 9, and as schematically shown in figure 10, there can be a flow diverting valve 213 having an inlet supplied by the inlet conduit 107, a first outlet that supplies the dispensing mouth 102 and a second outlet that supplies a return cycle that newly introduces the fluid in said inlet conduit, in particular upstream of at least one among the first auxiliary heater 188a, the second auxiliary heater 188b, the third auxiliary heater 188c.

In an embodiment, the flow diverting valve 213 can be a valve with automatic switching in function of the temperature, and can optionally be a valve with a memory-shape movable element.

In an alternative embodiment, the flow diverting valve 213 can be controlled electronically by the data processing unit.

Conveniently, the flow diverting valve 213 is configured to feed fluid on the first outlet or, alternatively, on the second outlet; in other words, the flow diverting valve 213 can be configured to prevent a simultaneous supply of fluid on the first outlet and on the second outlet.

In a further embodiment, this time shown in figure 11, the hydrosanitary device 100 object of the present disclosure can be configured to discharge in a discharge conduit 214 at least part of the fluid that flows in the inlet conduit 107 up to the moment at which such fluid has reached a predetermined threshold temperature, in particular a predetermined switching temperature Tsw that can conveniently be included in the predetermined range of temperatures previously mentioned.

The discharge conduit 214 is conveniently connected with a sewage system or an equivalent water disposal plant.

Also in this embodiment there can be a flow diverting valve 213 having an inlet supplied by the inlet conduit 107, a first outlet that feeds the dispensing mouth 102 and a second outlet that provides the fluid on the discharge conduit.

The features of the flow diverting valve 213 have been described in the preceding paragraphs, and therefore are not repeated.

The invention is not limited to the embodiments of figures; for this reason, the numbers and reference signs in the claims are provided for the sole purpose of increasing the intelligibility thereof, and have no limiting effect.

Finally, it is clear that additions, modifications, or variations, obvious to an expert in the art, may be applied to the object of the present disclosure, without thereby departing from the scope provided by the attached claims.

## Claims

1. Hydrosanitary device (100), comprising a dispensing body and at least one among a valve (104) for controlling the distribution of a hot fluid, and a boiler (500) or primary heater for producing said hot fluid,
wherein said valve (104) and/or said boiler (500) or primary heater is connected to said dispensing body by means of an inlet conduit (107),
and wherein said hydrosanitary device (100) comprises at least one first auxiliary heating element (188a) configured to act on said inlet conduit (107), preferably in cooperation with said valve (104) and/or boiler (500) or primary heater, for keeping the fluid that in use flows into said inlet conduit (107) within a predetermined range of temperatures, preferably up to the moment in which the fluid that flows in said inlet conduit (107) from said valve (104) and/or boiler (500) or primary heater reaches a temperature substantially comprised in said predetermined range of temperatures.

2. Hydrosanitary device (100), according to claim 1, wherein said at least one first auxiliary heating element (188a) is configured to be activated for a predetermined time, and/or to be activated in accordance to at least one among the following parameters:
- a time lapsed from a last dispensing of said fluid;
- an environmental temperature;
- a type of conditioning of said fluid;
optionally wherein said fluid comprises water, preferably drinking water.

3. Hydrosanitary device (100) according to claim 1 or claim 2, wherein the range of temperatures is [92-96] °C or is [70-80] °C and/or wherein said hot fluid has a temperature comprised in the range [30-105] °C, or comprised in the interval [40-101] °C, optionally wherein said hot fluid comprises water and is preferably water substantially boiling.

4. Hydrosanitary device (100) according to one or more of the preceding claims, comprising a data processing unit (115) operatively connected at least to said first auxiliary heating element (188a),
said data processing unit being configured to control said first auxiliary heating element (188a) for keeping the fluid that in use flows into said inlet conduit (107) into said predetermined range of temperatures,
preferably said data processing unit being operatively connected with, and in use acting in control on, said boiler (500) or primary heater and/or said valve (104) and/or being operatively connected to at least one sensor suitable for measuring at least one of said parameters.

5. Hydrosanitary device (100) according to one or more of the preceding claims, in form of a faucet, preferably a kitchen faucet, or in form of a wall-mount shower head, hand showerhead or faucet for shower or for bath tub.

6. Hydrosanitary device (100) according to one or more of the preceding claims, wherein said at least one first auxiliary heating element (188a) is of an electrical type and/or is electrically fed,
preferably wherein said hydrosanitary device (100) comprises at least one sensing element configured to identify a temperature of said dispensing body,
said hydrosanitary device (100) being configured to stop or limit a feeding of said at least one first auxiliary heating element (188a), preferably by means of the action of said data processing unit (115), when a temperature of said dispensing body, measured by means of said sensing element, exceeds a predetermined maximum temperature (Tmax) allowed for said dispensing body.

7. Hydrosanitary device (100) according to one or more of the preceding claims, comprising at least one second auxiliary heating element (188b), optionally further comprising a third auxiliary heating element (188c),
wherein at least one between said first auxiliary heating element (188a), said second auxiliary heating element (188b), said third auxiliary heating element (188c) is arranged into said dispensing body;
wherein said second auxiliary heating element (188b), and optionally said third auxiliary heating element (188c), is configured to act on said inlet conduit, preferably in cooperation with said valve (104) and/or boiler (500) or primary heater, for keeping the fluid that in use flows into said inlet conduit within a predetermined range of temperatures, preferably up to the moment in which the fluid that flows in said inlet conduit from said valve (104) and/or boiler (500) or primary heater reaches a temperature substantially comprised in said predetermined range of temperatures;
optionally wherein said second auxiliary heating element (188b), and optionally said third auxiliary heating element (188c), is electrically fed.

8. Hydrosanitary device (100) according to claim 7, wherein said first auxiliary heating element (188a) and said second auxiliary heating element (188b) are arranged in sequence or in series.

9. Hydrosanitary device (100) according to claim 4 and at least one between claim 7 or claim 8, wherein said data processing unit (115) is operatively connected with said second auxiliary heating element (188b) and optionally with said third auxiliary heating element (188c),
said data processing unit (115) being configured to control said second auxiliary heater (118b) for keeping the fluid that in use flows into said inlet conduit (107) within said predetermined range of temperatures;
preferably, said data processing unit (115) being configured to determine a selective activation of said first auxiliary heating element (188a) or of said second auxiliary heating element (188b), optionally of said second auxiliary heating element (188b) or of said third auxiliary heating element (188c), and/or to determine a simultaneous activation of said first auxiliary heating element (188a) and of said second auxiliary heating element (188b), optionally of said second auxiliary heating element (188b) and of said third auxiliary heating element (188c) or of said first auxiliary heating element (188a) and of said third auxiliary heating element (188c).

10. Hydrosanitary device (100) according to one or more of the preceding claims when depending on claim 5, wherein said inlet conduit (107) comprises a rod or dispensing conduit (101), or realizes part of said dispensing body, said rod or dispensing conduit (101) comprising a dispensing mouth (102), optionally arranged in correspondence of a terminal portion of said rod or dispensing conduit (101), and wherein said at least one first auxiliary heating element (188a), and optionally at least one between said second auxiliary heating element (188b) and said third auxiliary heater (188c), is arranged in proximity of said dispensing mouth (102) and/or upstream, and preferably in substantial proximity of, or in substantial correspondence of, said rod or dispensing conduit (101).

11. Hydrosanitary device (100) according to one or more of the preceding claims, comprising a control system suitable for preventing an excessive overheating of the fluid heated by the at least one first auxiliary heating element (188a) and/or for preventing an excessive overheating of said at least one first auxiliary heating element (188a), preferably configured to impede a boiling of the fluid;
preferably wherein said control system is configured to prevent that said at least one first auxiliary heating element (188a) leads to a localized boiling of the fluid.

12. Hydrosanitary device (100) according to claim 5, comprising a dispensing device (108) for beverages extracted from containers for dispensing of beverages, in particular disposable and/or re-refillable containers,
the beverages dispensing device (108) comprising:
- a support body (108b) configured to be coupled to a body (103) of said faucet (100);
- a distributing body (108a) configured to be removably connected to said support body (108b) and comprising a dispensing portion (109) configured to allow a distribution of a beverage in a container (400);
wherein:
- at least one between said support body (108b) and said distributing body (108a) is configured to retain and/or contain at least part of a container for dispensing of beverages (190);
- said support body(108b) comprises a water supplying inlet (122) configured to receive a fluid from said faucet (100);
said dispensing device (108) having:
- an assembled operative configuration, wherein said support body (108b) and said distributing body (108a) are coupled for allowing a dispensing of said beverage by making said fluid flow from said supply inlet (122), into said container for dispensing of beverages (190), and towards said dispensing portion (109);
- a disassembled operative configuration, wherein said support body(108b) and said distributing body (108a) are decoupled and allow an access to said container for dispensing of beverages (190);
preferably wherein said at least a first auxiliary heating element (188a) is arranged in correspondence of a branch of said inlet conduit (107) realizing a supply inlet (122) for said dispensing device (108).

13. Hydrosanitary device (100) according to one or more of the preceding claims, wherein said at least one first auxiliary heating element (188a) is arranged outside said inlet conduit (107), and is not in direct contact with said fluid;
or wherein said at least one first auxiliary heating element (188a) is arranged into said inlet conduit (107), and optionally is in direct contact with said fluid;
and/or wherein said hydrosanitary device (100) is configured to dispense, optionally by means of a control carried out by said data processing unit (115), a time-variant electric power at least to said at least one first auxiliary heating element (188a), optionally to said second auxiliary heating element (188b) and/or to said third auxiliary heating element (188c).

14. Hydrosanitary device (100) according to one or more of the preceding claims, comprising at least one temperature sensor element (189), configured to measure a temperature of said fluid in said inlet conduit (107), preferably in substantial correspondence of said rod or dispensing conduit (101) or in substantial proximity or correspondence of said dispensing mouth (102),
and wherein said temperature sensor (189) is configured to transmit a control signal suitable for determining a control of said at least one first auxiliary heating element (188a) in such a way that this latter acts on said inlet conduit, preferably in cooperation with said valve (104) and/or boiler (500) or primary heater, for keeping the fluid that in use flows into said inlet conduit (107) into said predetermined range of temperatures, preferably up to the moment wherein the fluid that flows in said inlet conduit (107) from said valve (104) and/or boiler (500) or primary heater reaches said temperature substantially comprised in said predetermined range of temperatures;
said temperature sensor (189) preferably transmitting said control signal towards said data processing unit (115).

15. Hydrosanitary device (100) according to one or more of the preceding claims, comprising a flow diverting valve (213), having an inlet receiving water from said inlet conduit (107), and having a first outlet and a second outlet,
wherein one between said first outlet and said second outlet is connected with a recirculation conduit feeding said fluid from said first outlet or said second outlet upstream to said at least a first auxiliary heating element (188a) or is connected with a discharge conduit (214);
wherein said flow diverting valve (213) is a temperature-controlled valve, for selecting the feeding of said first outlet or said second outlet with the fluid coming from said inlet in accordance to a temperature assumed by said fluid,
preferably wherein said flow diverting valve (213) is an automated, optionally mechanical, switching valve preferably comprising a temperature-sensitive element, in particular a memory shape element, movable for determining a feeding switching of said first outlet or said second outlet with the fluid coming from said inlet, and/or is a valve electronically controlled in accordance to a temperature assumed by said fluid for selecting the feeding of said first outlet or said second outlet with the fluid coming from said inlet,
optionally wherein said first outlet is connected with said recirculation conduit or with said discharge conduit (214), and wherein said second outlet is connected to said dispensing mouth (102),
said flow diverting valve (213) being arranged downstream of said at least one first auxiliary heating element (188a) and upstream to said dispensing mouth (102),
preferably wherein said discharge conduit (214) is connected to a sewage system or water disposal plant.
